# EUROPEAN PATENT APPLICATION

(11) **EP 2 388 746 A1**
(43) Date of publication of application: **23.11.2011**
(21) Application number: 10163422.8
(22) Date of filing: 20.05.2010
(51) Int. Cl.: G06Q 30/00, H04L 29/08

(54) **Pre-caching location based advertising for repeated out of coverage scenarios based on commuter or regular travel patterns**

(71) Applicant: RESEARCH IN MOTION LIMITED, Waterloo, Ontario N2L 3W8 (CA)
(72) Inventor: Cumming, Joel George, Waterloo Ontario N2L 0A4 (CA)
(74) Representative: Patel, Binesh

(57) **Abstract**

A method of providing location-based advertising to a mobile device entails identifying a frequent path over which the device has repeatedly traveled, identifying an out-of-coverage portion of the frequent path, determining LBA for the out-of-coverage portion of the frequent path, and pre-caching on the mobile device the LBA for the out-of-coverage portion of the frequent path.

## Description

### TECHNICAL FIELD

The present technology relates generally to mobile devices and, more particularly, to location-based advertising for mobile devices.

### BACKGROUND

Location-based advertising (LBA) delivers electronic advertising to mobile devices based on their location. By tracking the location of a mobile device, a wireless network operator may send location-specific advertising to the mobile device for commercial establishments operating in the immediate vicinity of the mobile device. For example, a restaurant may advertise its daily specials or offer e-coupons to mobile device users that are in the vicinity of the restaurant.

One problem with LBA is that a device may be temporarily out of wireless coverage, and thus be unable to receive LBA. This may occur, for example, if the mobile device strays beyond coverage zones or if the mobile device enters a tunnel, subway, or other underground structure that precludes reception of a wireless signal. In these cases, timely LBA cannot be delivered to the mobile device. A solution to this problem would thus be highly desirable.

### BRIEF DESCRIPTION OF THE DRAWINGS

Further features and advantages of the present technology will become apparent from the following detailed description, taken in combination with the appended drawings, in which:

FIG. 1 is a schematic depiction of a wireless communications device as one example of a mobile device on which the present technology may be implemented;

FIG. 2 is a flowchart depicting main steps of a method of providing location-based advertising to a mobile device in accordance with one implementation of the present technology;

FIG. 3 is a flowchart depicting main steps of a method of providing location-based advertising to a mobile device in accordance with another implementation of the present technology;

FIG. 4 depicts an example of a mobile device displaying location-based advertising;

FIG. 5 schematically depicts a frequently traveled path that leads the mobile device from a first coverage to a second coverage zone, passing through an intermediary out-of-coverage zone for which location-based advertising is pre-cached in accordance with various implementations of the present technology;

FIG. 6 schematically depicts an example of a frequently traveled path between a user's home and workplace where a portion of the path is an out-of-coverage zone (while the user is riding the subway);

FIG. 7 schematically depicts another example of pre-caching for a fringe coverage zone; and

FIG. 8 depicts various LBA caching options that may be made available to the user of the mobile device on which this present technology is implemented, thereby permitting the user to enable and disable the pre-caching function and to furthermore enable the user to prescribe what types of ads the user wishes to pre-cache.

It will be noted that throughout the appended drawings, like features are identified by like reference numerals.

### DETAILED DESCRIPTION

In general, the present technology provides a novel method, computer-readable medium and mobile device for pre-caching location-based advertising so that this location-based advertising can be made available to the user of the mobile device when the mobile device is out of wireless coverage (and thus traditionally unable to receive over-the-air advertising).

Thus, one aspect of the present technology is a method of providing location-based advertising to a mobile device. The method entails identifying a frequent path over which the device has repeatedly traveled, identifying an out-of-coverage portion of the frequent path, determining LBA for the out-of-coverage portion of the frequent path, and pre-caching on the mobile device the LBA for the out-of-coverage portion of the frequent path.

Another aspect of the present technology is a computer-readable medium comprising instructions in code which when loaded into memory and executed on a processor of a mobile device is adapted to cause the mobile device to identify a frequent path over which the device has repeatedly traveled, identify an out-of-coverage portion of the frequent path, determine LBA for the out-of-coverage portion of the frequent path, and pre-cache on the mobile device the LBA for the out-of-coverage portion of the frequent path.

Yet another aspect of the present technology is a mobile device having a location-determining subsystem for determining a current location of the mobile device, a memory coupled to a processor that is configured to receive current location data from the location-determining subsystem to identify a frequent path over which the device has repeatedly traveled, and a radiofrequency transceiver for wirelessly receiving location-based advertising (LBA). The processor is further configured to identify an out-of-coverage portion of the frequent path, determine LBA for the out-of-coverage portion of the frequent path, and pre-cache in the memory of the mobile device the LBA for the out-of-coverage portion of the frequent path.

The details and particulars of these aspects of the technology will now be described below, by way of example, with reference to the attached drawings.

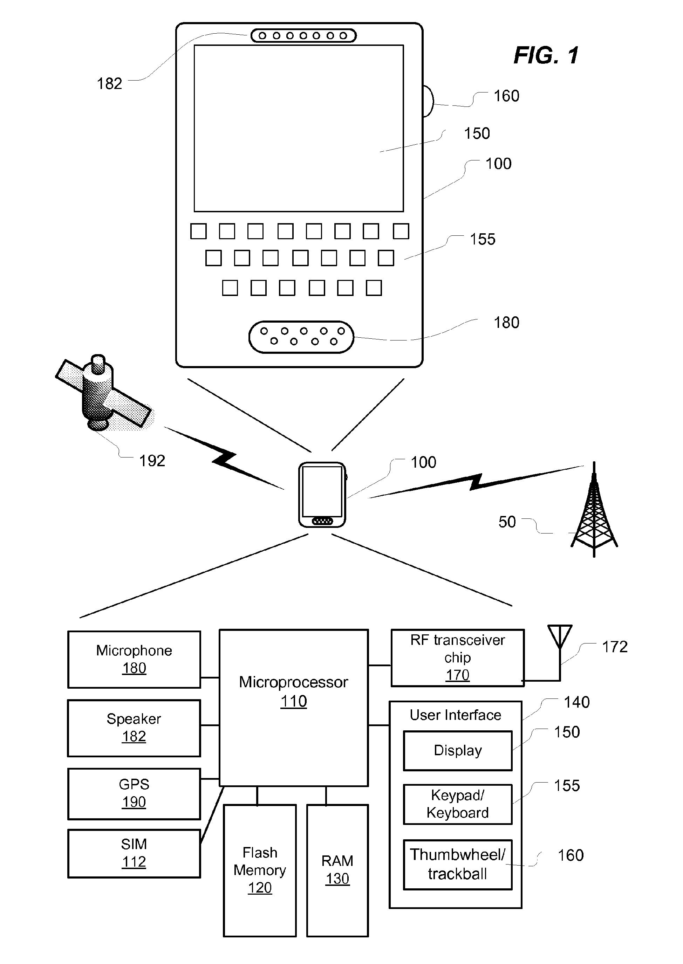

FIG. 1 is a schematic depiction of a wireless communications device as one example of a mobile device on which the present technology may be implemented. As shown by way of example in FIG. 1, the novel mobile device, which is designated generally by reference numeral 100, includes a processor (or microprocessor) 110 for executing one or more applications, memory in the form of flash memory 120 and/or RAM 130 (or any equivalent memory devices) for storing the one or more applications and related data, and a user interface 140 with which the user interacts with the device. The user interface 140 may include a liquid crystal display (LCD) 150 and an alphanumeric keypad/keyboard 155. The device may include a trackball, thumbwheel or trackpad 160 for cursor movement and navigation. Alternatively, the user interface may include a touch-sensitive display screen.

As shown by way of example in FIG. 1, the mobile device 100 includes a radiofrequency (RF) transceiver chip 170 and associated antenna 172 for wireless communications using any one of known wireless communication protocols such as, for example, GSM, UMTS, LTE, CDMA, W-CDMA, etc. For example, if the device is a GSM device, a SIM card 112 is provided. Optionally, where the device is a voice-enabled wireless communications device such as, for example, a smartphone or cell phone, the device would further include a microphone 180 and a speaker 182. This device may optionally include a Global Positioning System (GPS) receiver chipset 190 or other location-determining subsystem.

Although the present disclosure refers to expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of position-determining subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Radiolocation techniques may also be used in conjunction with GPS in a hybrid positioning system.

References herein to "GPS" are meant to include Assisted GPS and Aided GPS.

In accordance with implementations of this new technology, this novel mobile device is configured to pre-cache location-based advertising, also referred to herein as "LBA", for one or more zones where the device is out of coverage. Accordingly, the novel mobile device 100 comprises a location-determining subsystem (e.g. GPS 190) for determining a current location of the mobile device. The memory 120, 130 and processor 110 are configured to receive current location data from the location-determining subsystem (e.g. GPS 190) to identify a frequent path over which the device has repeatedly traveled. The RF transceiver 170 wirelessly receives location-based advertising (LBA) and furthermore receives LBA in anticipation of being out-of-coverage. This is accomplished by configuring the processor to identify an out-of-coverage portion of the frequently traveled path and then determine LBA for the out-of-coverage portion of the frequent path. This LBA is then downloaded to the mobile device before the device reaches the out-of-coverage portion of the path. In other words, the LBA (for the out-of-coverage portion of the frequent path) is pre-cached in the memory of the mobile device so it can be later accessed and displayed onscreen when the device moves out of coverage. The user may thus receive timely LBA even though his or her mobile device is out of wireless coverage.

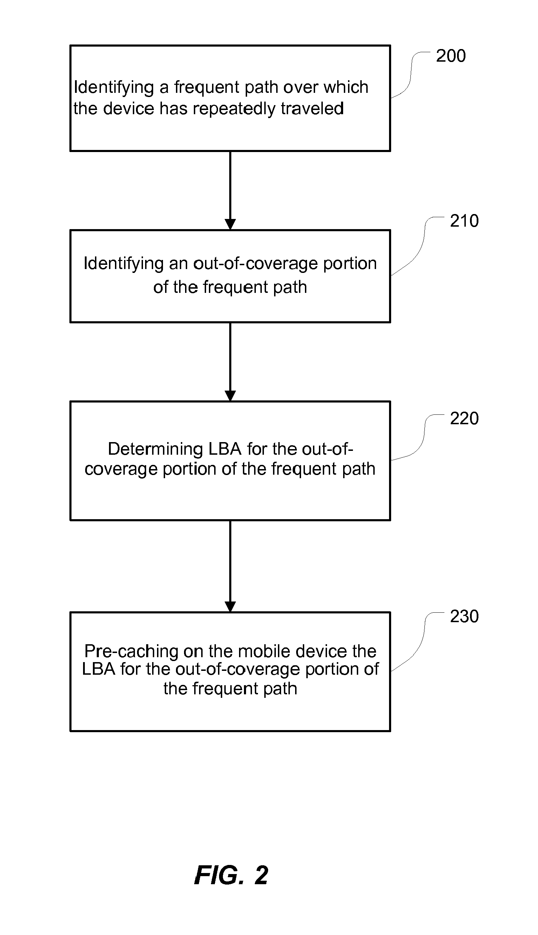

FIG. 2 is a flowchart depicting main steps of a corresponding method of providing location-based advertising to a mobile device in accordance with one implementation of the present technology. As depicted in FIG. 2, the method entails a step 200 of identifying a frequent path over which the device has repeatedly traveled, a step 210 of identifying an out-of-coverage portion of the frequent path, a step 220 of determining LBA for the out-of-coverage portion of the frequent path, and a step 230 of pre-caching on the mobile device the LBA for the out-of-coverage portion of the frequent path.

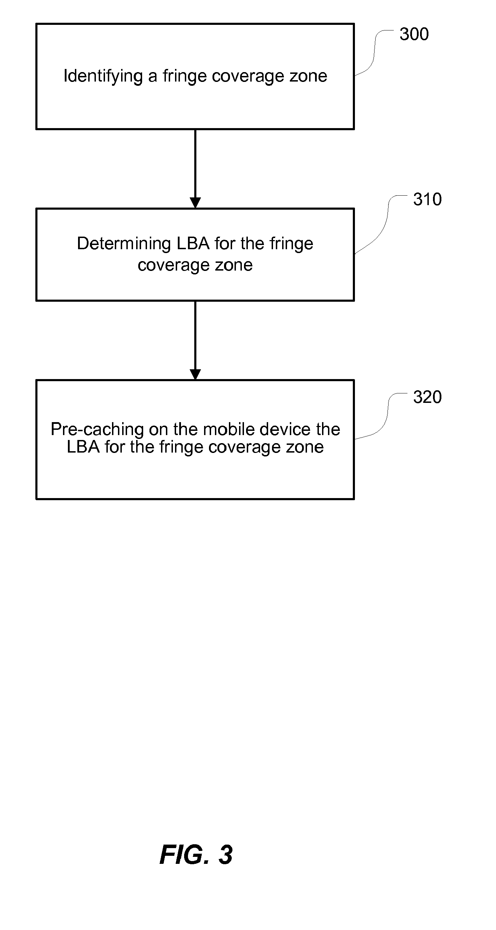

FIG. 3 is a flowchart depicting main steps of an ancillary method of providing location-based advertising to a mobile device in accordance with another implementation of the present technology. Specifically, this ancillary aspect of the technology enables the device to pre-cache LBA for fringe coverage zones. As depicted in FIG. 3, this particular method entails a step 300 of identifying a fringe coverage zone, a step 310 of determining LBA for the fringe coverage zone, and a step 320 of pre-caching on the mobile device the LBA for the fringe coverage zone. As will be elaborated below in greater detail, this ancillary method enables the device to optionally download and pre-cache LBA for zones that have spotty or inconsistent coverage to ensure that LBA is always available when the device is located in one of these fringe coverage zones.

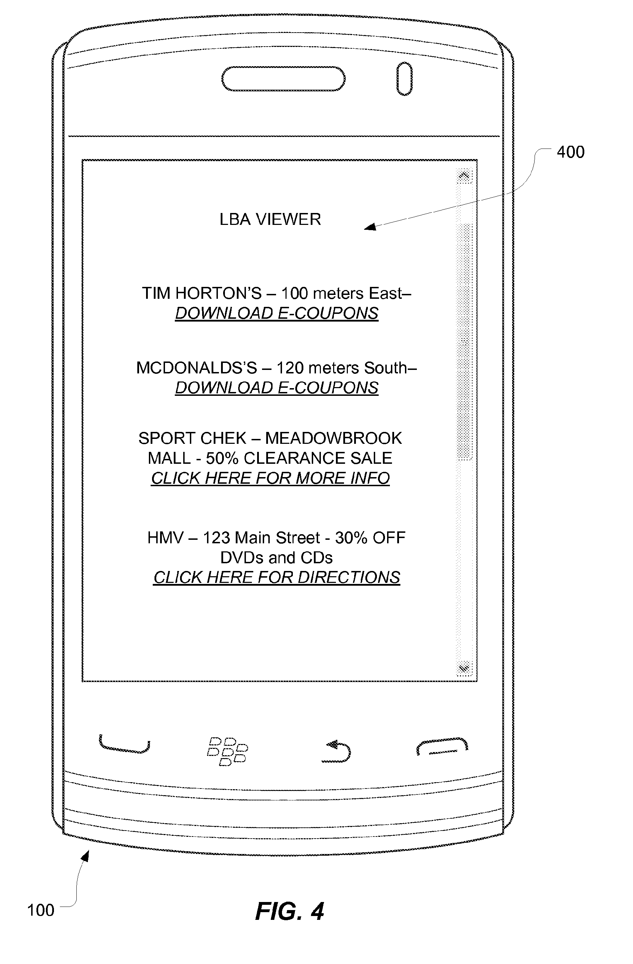

FIG. 4 depicts an example of a mobile device displaying location-based advertising. As shown by way of example, the mobile device 100 may have an LBA viewer 400 (or the LBA may be presented via a browser or other application). In this exemplary implementation, the device presents onscreen various location-based ads that might be of interest to the user of the mobile device. The user may filter what he receives or he or she may choose to subscribe to a service that determines what sorts of ads are delivered to the device. In any event, the mobile device may present ads that are geographically relevant to the user's current position such as food or restaurants that are nearby, geographically proximate stores offering discounts or special deals, etc. The ad may have a hyperlink, as shown by way of example, that can be clicked to obtain further details.

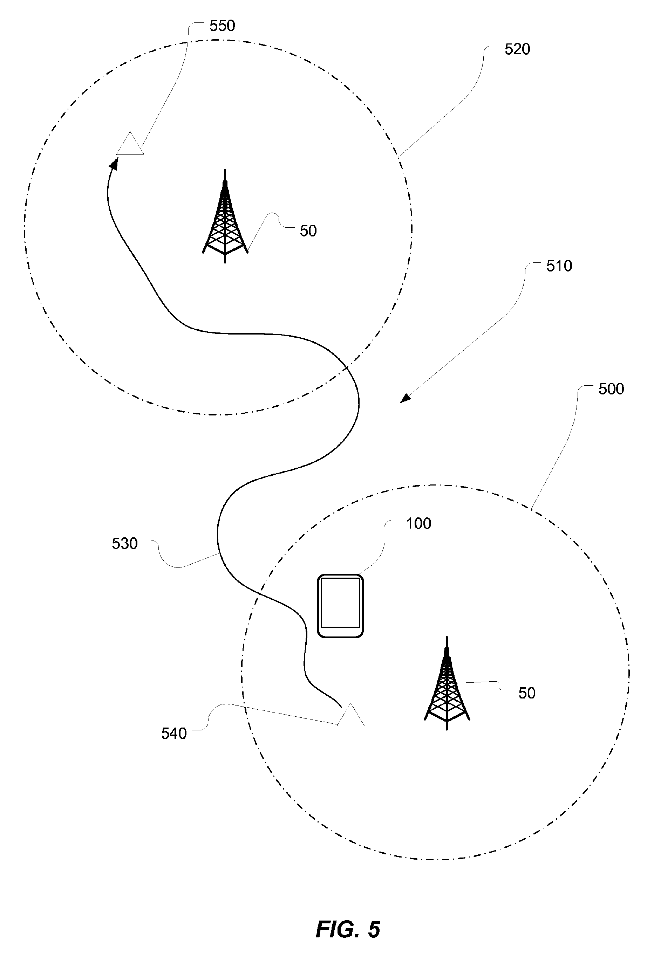

FIG. 5 schematically depicts a frequently traveled path that leads the mobile device from a first coverage zone to a second coverage zone, passing through an intermediary out-of-coverage zone for which location-based advertising is pre-cached in accordance with various implementations of the present technology. In this schematic depiction, there is a first coverage zone 500, an intermediary out-of-coverage zone 510, and a second coverage zone 520. In this example, the mobile device 100 is travelling along a frequent path denoted 530 from a starting point 540 to a destination 550. A portion of the frequent path lies in the out-of-coverage zone 510. When the mobile device is located in the first coverage zone, the device may receive timely LBA data over the air from respective base station tower 50. Likewise, when the mobile device is located in the second coverage zone, the device may receive timely LBA data over the air from the respective base station tower 50. However, when the device is located between the first and second coverage zones, i.e. in the out-of-coverage zone, the mobile device cannot receive timely LBA data from either tower 50. Thus, in accordance with the present technology, the mobile device obtains and pre-caches LBA data for the out-of-coverage portion of the frequent path 530 from the tower 50 of the first coverage zone 500 before departing the first coverage zone 500. The mobile device 100 only obtains (downloads) and pre-caches LBA for the out-of-coverage portion 510 of the frequent path 530 when it predicts or anticipates that it will be travelling imminently into the out-of-coverage zone 510.

Determining that the mobile device will enter an out-of-coverage zone may entail collecting travel data over a period of time to establish frequent paths for the device (e.g. to and from work). Identifying the out-of-coverage portion of the frequent path may comprise collecting coverage data for the frequent path. This may be done locally by the device or, alternatively, these computations may be offloaded to a server.

In another implementation, the method may involve monitoring user activity on the mobile device to determine if the user activity relates to location-based advertising. This may be accomplished by monitoring what server calls are made or what searches are requested on a browser. The content may be parsed to determine what the user may be interested in. For example, if the user employs a search engine to search for a particular type of restaurant or a particular type of food, then relevant food-related advertising may be of interest to the mobile device user. In other words, based on the user activity, the device in this particular implementation will determine if the location-based advertising is pre-cached in a cache on the mobile device. Where the location-based advertising is already pre-cached on the mobile device, the location-based advertising is retrieved from the cache on the mobile device, thus saving the uplink bandwidth from making a request over the air.

In another implementation of this technology, the mobile device may be programmed by the user to define a route over which the mobile device will travel. For example, the user may be visiting a new location and wish to ensure that LBA is available for all portions of the route. This method would thus enable the user to program a route over which the mobile device will travel. The device (or a server in communication with the device) would then determine any out-of-coverage portions of the route to be traveled. In one implementation, the device may consult a coverage database or coverage map to determine whether there are any portions of the programmed route where there is no coverage or where coverage is spotty. The device (or a server in communication with the device) would then determine LBA for the out-of-coverage portion of the route. Finally, LBA would be pre-cached on the mobile device for the out-of-coverage portion(s) of the route.

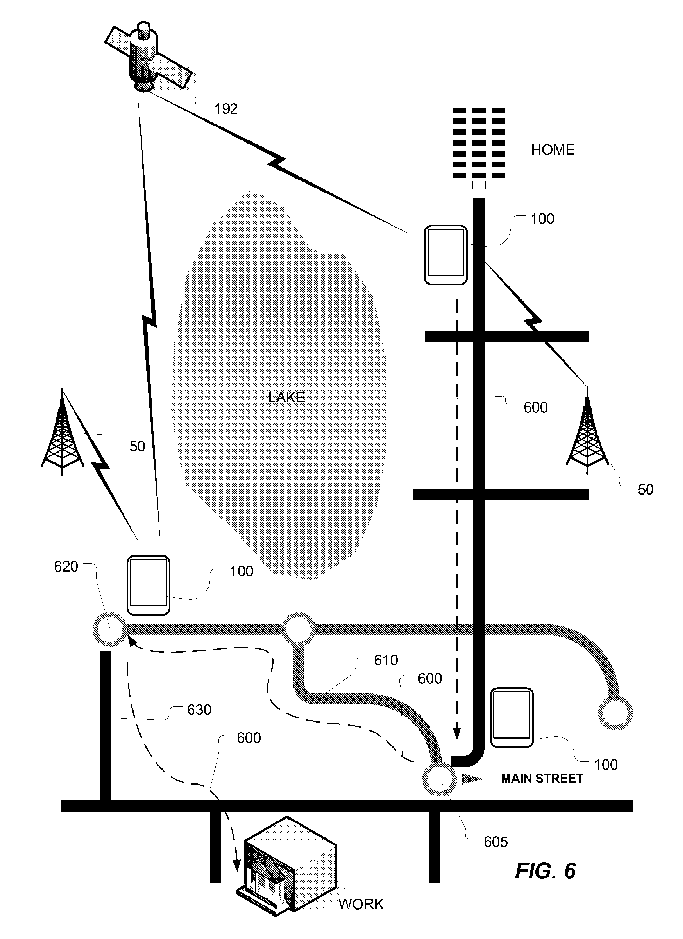

FIG. 6 schematically depicts an example of a frequently traveled path between a user's home and workplace where a portion of the path is an out-of-coverage zone (while the user is riding the subway). In this example scenario, the user leaves home with his mobile device 100. The user travels outdoors along a frequent path (also referred to herein as the device travel path) 600 (e.g. a city street having full wireless coverage from nearby tower 50). The user reaches a subway station ("Main Street Station") 605 and then loses his wireless connection as he goes underground into the subway station (assuming there is no interior repeater to provide a signal underground). The mobile device user then catches a subway train and rides along an out-of-coverage portion 610 of the frequent path (device travel path) 600 to another subway station 620 whereupon the user emerges to street level, thereby regaining wireless connectivity from a nearby tower 50 in that part of town. The mobile device user then walks along the street 630 to his workplace.

In this example scenario, the mobile device predicts that the user will travel this frequent path 600, 605, 610, 620, 630 after having collected travel patterns over a period of time (long enough to recognize a pattern that every Monday to Friday the user commutes from home to work). Having established this as a frequent path, the device looks for out-of-coverage portions of the path. Again, by observation and data collection, the device would have noted that the portion of the frequent path corresponding to the underground subway ride is out of wireless coverage. When the current time and current location of the mobile device correspond to the time and location when the user historically takes this frequent path, the device will automatically download and pre-cache LBA for the out-of-coverage portion of the frequent path. Thus, as the user travels down the first leg of the frequent path 600, the device will trigger a request to download and pre-cache LBA for the out-of-coverage portion 610 of the frequent path. This LBA can be displayed/presented to the user while the user is riding the subway.

This LBA may relate to goods, services, etc. that are being offered by commercial establishments along the third leg of the user's frequent path. Thus, for example, the user may be offered special deals, discounts, e-coupons, etc. for coffee, donuts, breakfast, etc. for establishments along the path from the subway station 620 to work (for the morning journey). In the evening, assuming the user reverses his path, the LBA may be pre-cached as the user returns toward subway station 620. This LBA would be for services and goods that are being offered by commercial establishments along the way between subway station 605 and home (e.g. dinner offers, shopping, evening sports events and entertainment). By presenting this LBA during the out-of-coverage time, the user has time to consider the LBA and make a decision as to whether he wishes to take advantage of any offers. If the LBA is delivered only on re-emerging from the subway, it may be presented too late for the user to consider it.

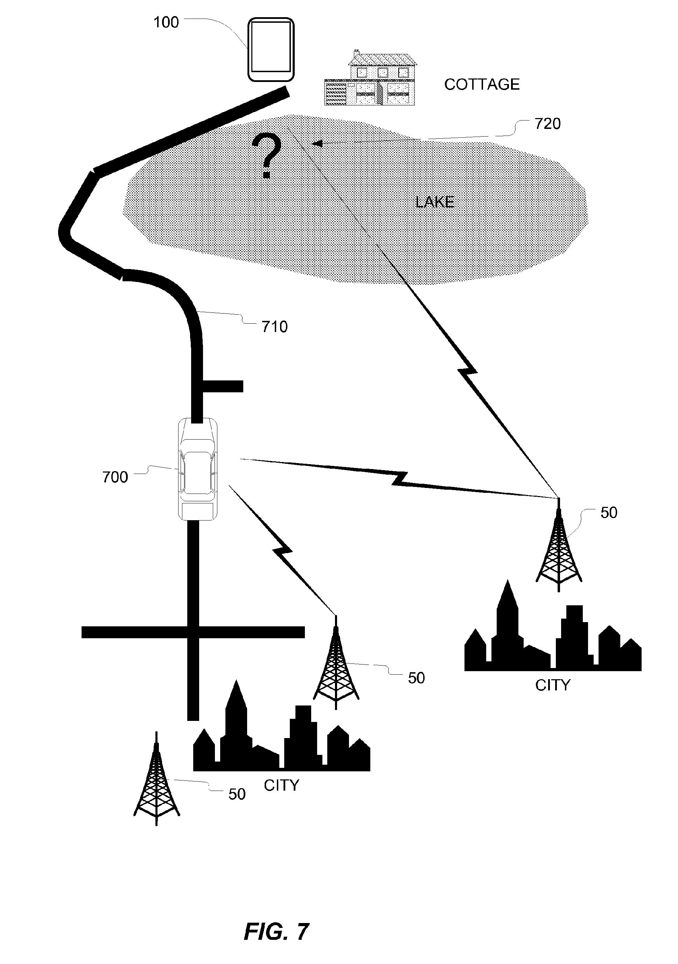

FIG. 7 schematically depicts another example of pre-caching for a fringe coverage zone. In this example, the user and his family travels in their car 700 up to their cottage which is in a zone of poor coverage ("fringe coverage"). The frequent path 710 is identified by the mobile device because the mobile device travels this path every Saturday morning and returns every Sunday evening. However, wireless reception at the cottage is spotty. Therefore, the device recognizes that it is entering a zone of fringe coverage 720. Accordingly, the device in this implementation obtains and pre-caches LBA for the fringe coverage zone to ensure that LBA is available when the family gets to the cottage.

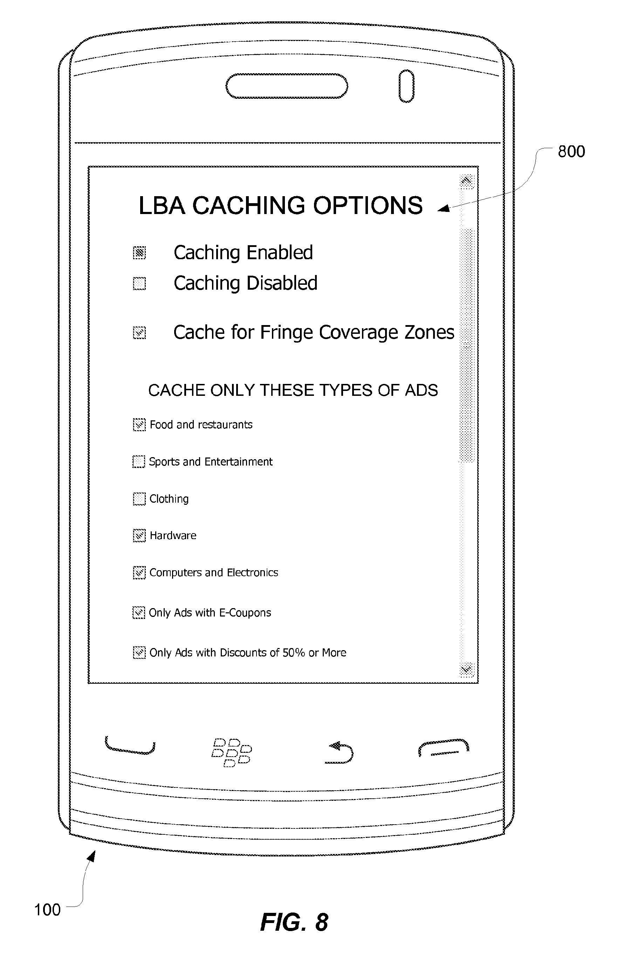

FIG. 8 depicts various LBA caching options that may be made available to the user of the mobile device 100 on which this present technology is implemented, thereby permitting the user to enable and disable the pre-caching function and to furthermore enable the user to prescribe what types of ads the user wishes to pre-cache.

As shown by way of example in FIG. 8, an LBA caching options/settings page 800 may be include an option or toggle to turn on or turn off the LBA pre-caching feature. Some users may not wish to expend battery resources, local memory or wireless bandwidth to download and pre-cache LBA. The options page 800 may include a setting to automatically pre-cache for any fringe coverage zones. As noted earlier, pre-caching for fringe coverage zones may be an option that a user may wish to disable if he does not particularly care to receive LBA in those fringe zones. However, if the user wants to ensure that the LBA is delivered on time, then the user will wish to engage this function to ensure that LBA is pre-cached prior to entering any fringe coverage zones.

Furthermore, as shown by way of example in FIG. 8, the options page 800 may enable the user to select which types of ads are to be pre-cached. This enables the user to filter those ads that are of interest (and to not waste resources caching ads that are not of interest).

In another implementation of this technology, pre-caching of LBA may be triggered manually by the user of the mobile device, i.e. triggered by receipt of user input on the user input device of the mobile device. The user may wish to proactively download and pre-cache LBA when the user knows that the device will be out of coverage. For example, the user of the mobile device may choose to power off the mobile device or to turn off the wireless transceiver of the mobile device, e.g. when entering a hospital or boarding an aircraft. In other words, the trigger may be user input to shut down the device, user input to shut off the wireless transceiver, or another dedicated key sequence, hot-key, menu item, icon, etc. that causes the device to download and pre-cache LBA. Alternatively, the user input may be a voice-command.

Regardless of the specific nature of the user input, the device, once triggered, will then download and pre-cache LBA for later presentation. The device may automatically download and pre-cache the LBA or it may query the user as to whether LBA should indeed be proactively downloaded and pre-cached in this particular circumstance. Whether to download automatically or to query may be configured in the setting or options page.

The LBA that is downloaded and pre-cached may be for a predetermined area surrounding the device, e.g. a radius of 10 km, 50 km, etc., or it may be based on a predicted route or a programmed route, or by parsing a calendar application for geographical information from which a route may be inferred. For example, if a calendar entry indicates that the mobile user has a meeting in Chicago later in the day, and the device is currently in Toronto, then the device may infer a route from this calendar information. Travel information may also be parsed from e-mail or text messages. Where no route is programmed or otherwise predictable or inferable, the device may automatically pre-cache LBA based on prior user settings or default settings or it may query the user prior to shutdown of the transceiver as to what LBA might be of interest.

This new technology has been described in terms of specific implementations and configurations which are intended to be exemplary only. Persons of ordinary skill in the art will, having read this disclosure, readily appreciate that many obvious variations, refinements and modifications may be made without departing from the inventive concept(s) disclosed herein. The scope of the exclusive right sought by the Applicant(s) is therefore intended to be limited solely by the appended claims.

## Claims

1. A method of providing location-based advertising at a mobile device, the method comprising:
identifying a device travel path;
identifying an out-of-coverage portion of the path;
determining location-based advertising (LBA) based on the out-of-coverage portion of the path; and
pre-caching on the mobile device the LBA for the out-of-coverage portion of the path.

2. The method as claimed in claim 1 further comprising:
identifying a fringe coverage zone;
determining LBA for the fringe coverage zone; and
pre-caching on the mobile device the LBA for the fringe coverage zone.

3. The method as claimed in claim 1 or claim 2 further comprising:
monitoring user activity on the mobile device to determine if the user activity relates to location-based advertising;
determining if the location-based advertising is pre-cached in a cache on the mobile device; and
where the location-based advertising is pre-cached on the mobile device, obtaining the location-based advertising from the cache on the mobile device.

4. The method as claimed in any one of claims 1 to 3 further comprising:
enabling programming of a route over which the mobile device will travel;
determining the out-of-coverage portion of the route;
determining LBA for the out-of-coverage portion of the route; and
pre-caching on the mobile device the LBA for the out-of-coverage portion of the route.

5. The method as claimed in any one of claims 1 to 4 wherein identifying the frequent path comprises collecting travel data and wherein identifying the out-of-coverage portion of the frequent path comprises collecting coverage data for the frequent path.

6. The method as claimed in any one of claims 1 to 5 comprising triggering the pre-caching of LBA in response to receipt of user input.

7. A computer-readable medium comprising instructions in code which when loaded into memory and executed on a processor of a mobile device is adapted to cause the mobile device to:
identify a frequent path over which the device has repeatedly traveled;
identify an out-of-coverage portion of the frequent path;
determine LBA for the out-of-coverage portion of the frequent path; and
pre-cache on the mobile device the LBA for the out-of-coverage portion of the frequent path.

8. The computer-readable medium as claimed in claim 7 wherein the code is further adapted to cause the mobile device to:
identify a fringe coverage zone;
determine LBA for the fringe coverage zone; and
pre-cache on the mobile device the LBA for the fringe coverage zone.

9. A mobile device comprising:
a location-determining subsystem for determining a current location of the mobile device;
a memory coupled to a processor that is configured to receive current location data from the location-determining subsystem to identify a frequent path over which the device has repeatedly traveled; and
a radiofrequency transceiver for wirelessly receiving location-based advertising (LBA),
wherein the processor is further configured to:
identify an out-of-coverage portion of the frequent path;
determine LBA for the out-of-coverage portion of the frequent path; and
pre-cache in the memory of the mobile device the LBA for the out-of-coverage portion of the frequent path.

10. The device as claimed in claim 9 wherein the processor is further configured to:
identify a fringe coverage zone;
determine LBA for the fringe coverage zone; and
pre-cache on the mobile device the LBA for the fringe coverage zone.

11. The device as claimed in claim 9 or claim 10 wherein the processor is further configured to:
monitor user activity on the mobile device to determine if the user activity relates to location-based advertising;
determine if the location-based advertising is pre-cached in the memory of the mobile device; and
where the location-based advertising is pre-cached on the mobile device, obtain the location-based advertising from the memory of the mobile device.

12. The device as claimed in any one of claims 9 to 11 comprising a user input device for receiving user input that programs a route over which the mobile device will travel and wherein the processor is further configured to:
determine the out-of-coverage portion of the route;
determine LBA for the out-of-coverage portion of the route; and
pre-cache on the mobile device the LBA for the out-of-coverage portion of the route.

13. The device as claimed in any one of claims 9 to 12 wherein the processor is further configured to:
collect travel data to identify the frequent path; and
collect coverage data for the frequent path to identify the out-of-coverage portion.

14. The device as claimed in any one of claims 9 to 13 comprising a user input device for receiving user input that triggers the pre-caching of the LBA.

## Amended claims

### Amended claims in accordance with Rule 137(2) EPC.

**1.** A method of providing location-based advertising at a mobile device (100), the method comprising:
identifying (200) a frequent travel path over which the mobile device has repeatedly traveled;
identifying (210) an out-of-coverage portion of the frequent travel path by collecting coverage data for the frequent travel path;
determining (220) location-based advertising (LBA) based on the out-of-coverage portion of the frequent travel path; and
pre-caching (230) on the mobile device the LBA for the out-of-coverage portion of the frequent travel path.

**2.** The method as claimed in claim 1 further comprising:
identifying (300) a fringe coverage zone;
determining (310) LBA for the fringe coverage zone; and
pre-caching (320) on the mobile device the LBA for the fringe coverage zone.

**3.** The method as claimed in claim 1 or claim 2 further comprising:
monitoring user activity on the mobile device to determine if the user activity relates to location-based advertising;
determining if the location-based advertising is pre-cached in a cache on the mobile device; and
where the location-based advertising is pre-cached on the mobile device, obtaining the location-based advertising from the cache on the mobile device.

**4.** The method as claimed in any one of claims 1 to 3 comprising triggering the pre-caching of LBA in response to receipt of user input causing the radiofrequency transceiver of the mobile device to shut off.

**5.** A computer-readable medium comprising instructions in code which when loaded into memory and executed on a processor of a mobile device is adapted to cause the mobile device to:
identify a frequent travel path over which the mobile device has repeatedly traveled;
identify an out-of-coverage portion of the frequent travel path by collecting coverage data for the frequent travel path;
determine LBA for the out-of-coverage portion of the frequent travel path; and
pre-cache on the mobile device the LBA for the out-of-coverage portion of the frequent travel path.

**6.** The computer-readable medium as claimed in claim 5 wherein the code is further adapted to cause the mobile device to :
identify a fringe coverage zone;
determine LBA for the fringe coverage zone; and
pre-cache on the mobile device the LBA for the fringe coverage zone.

**7.** A mobile device (100) comprising:
a location-determining subsystem for determining a current location of the mobile device;
a memory (120, 130) coupled to a processor (110) that is configured to receive current location data from the location-determining subsystem to identify a frequent travel path over which the mobile device has repeatedly traveled; and
a radiofrequency transceiver (170) for wirelessly receiving location-based advertising (LBA),
wherein the processor (110) is further configured to:
identify an out-of-coverage portion of the frequent travel path by collecting coverage data for the frequent travel path;
determine LBA for the out-of-coverage portion of the frequent travel path; and
pre-cache in the memory of the mobile device the LBA for the out-of-coverage portion of the frequent travel path.

**8.** The device (100) as claimed in claim 7 wherein the processor (110) is further configured to:
identify a fringe coverage zone;
determine LBA for the fringe coverage zone; and
pre-cache on the mobile device the LBA for the fringe coverage zone.

**9.** The device (100) as claimed in claim 7 or claim 8 wherein the processor (110) is further configured to:
monitor user activity on the mobile device to determine if the user activity relates to location-based advertising;
determine if the location-based advertising is pre-cached in the memory of the mobile device; and
where the location-based advertising is pre-cached on the mobile device, obtain the location-based advertising from the memory of the mobile device.

**10.** The device (100) as claimed in any one of claims 7 to 9 comprising a user input device for receiving user input causing the radiofrequency transceiver of the mobile device to shut off, wherein the user input triggers the pre-caching of the LBA.
